(19) Europäisches Patentamt / European Patent Office / Office européen des brevets

(11) **EP 4 446 475 A1**

(12) **EUROPEAN PATENT APPLICATION**
published in accordance with Art. 153(4) EPC

(43) Date of publication:
**16.10.2024 Bulletin 2024/42**

(21) Application number: **22904006.8**

(22) Date of filing: **21.11.2022**

(51) International Patent Classification (IPC):
*C25B 15/00* (2006.01)    *C01B 3/02* (2006.01)
*C25B 1/04* (2021.01)    *C25B 9/00* (2021.01)
*C25B 9/67* (2021.01)    *C25B 11/052* (2021.01)
*C25B 11/075* (2021.01)    *C25B 15/023* (2021.01)

(52) Cooperative Patent Classification (CPC):
C01B 3/02; C25B 1/04; C25B 9/00; C25B 9/67;
C25B 11/052; C25B 11/075; C25B 15/00;
C25B 15/023; Y02E 60/36

(86) International application number:
**PCT/JP2022/042984**

(87) International publication number:
**WO 2023/106075 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021 JP 2021199459**

(71) Applicant: **Panasonic Intellectual Property
Management Co., Ltd.
Osaka-shi, Osaka 540-6207 (JP)**

(72) Inventors:
• **ASAZAWA, Koichiro**
  **Kadoma-shi, Osaka 571-0057 (JP)**
• **MURASE, Hideaki**
  **Kadoma-shi, Osaka 571-0057 (JP)**
• **SAWADA, Koichi**
  **Kadoma-shi, Osaka 571-0057 (JP)**
• **HAYASHI, Takao**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **WATER ELECTROLYSIS DEVICE OPERATION METHOD AND WATER ELECTROLYSIS DEVICE**

(57)    A method for operating a water electrolyzer includes applying a voltage to a water electrolysis cell such that a current having a target current value flows through the water electrolysis cell and stopping the current that flows through the water electrolysis cell upon a voltage applied to the water electrolysis cell being increased to a predetermined threshold value or more when a water electrolysis reaction is performed.

FIG. 1

EP 4 446 475 A1

**Description**

Technical Field

The present disclosure relates to a method for operating a water electrolyzer and a water electrolyzer.

Background Art

Attention has been focused on the use of renewable energy sources, such as solar power and wind power, as a global warming countermeasure. However, generating electric power using a renewable energy source is disadvantageous in that fluctuations in power output are large. In addition, when electric power is generated using a renewable energy source, surplus power may become wasted. Thus, the efficiency with which a renewable energy source is used is not always sufficiently high. Therefore, a method of efficiently using surplus power by producing hydrogen from the surplus power and storing the hydrogen has been studied.

As described in PTLs 1 and 2, electrolysis of water has been used for producing hydrogen from surplus power. Electrolysis of water is referred also as "water electrolysis".

Citation List

Patent Literature

PTL 1: Japanese Unexamined Patent Application Publication No. 2021-70849
PTL 2: International Publication No. 2020/208991

Summary of Invention

Technical Problem

A method for operating a cell in an optimal manner is required for increasing the efficiency of a water electrolyzer. For increasing the efficiency of a water electrolyzer, furthermore, it is required to generate hydrogen with a small amount of electric power. While a water electrolyzer is operated continuously, the voltage applied to a water electrolysis cell increases gradually and the amount of electric power required for generating hydrogen per unit volume increases accordingly. This results in a reduction in the efficiency with which hydrogen is produced using the water electrolyzer.

An object of the present disclosure is to provide a technique for limiting a reduction in the efficiency of water electrolysis.

Solution to Problem

The present disclosure provides
a method for operating a water electrolyzer, the method including:

applying a voltage to a water electrolysis cell such that a current having a target current value flows through the water electrolysis cell; and
stopping the current that flows through the water electrolysis cell upon a voltage applied to the water electrolysis cell being increased to a predetermined threshold value or more when a water electrolysis reaction is performed.

Advantageous Effects of Invention

According to the present disclosure, a reduction in the efficiency of water electrolysis can be limited.

Brief Description of Drawings

[Fig. 1] Fig. 1 is a schematic cross-sectional view of an example of an anion exchange membrane-type water electrolysis cell.

[Fig. 2] Fig. 2 is a schematic cross-sectional view of an example of an anion exchange membrane-type water electrolyzer.

[Fig. 3] Fig. 3 is a schematic cross-sectional view of an example of an alkali separation membrane-type water electrolysis cell.

[Fig. 4] Fig. 4 is a schematic cross-sectional view of an example of an alkali separation membrane-type water electrolyzer.

[Fig. 5] Fig. 5 is a diagram schematically illustrating an example of the crystal structure of a layered double hydride (LDH).

[Fig. 6] Fig. 6 is a flowchart illustrating a method for operating a water electrolyzer.

[Fig. 7] Fig. 7 is a flowchart illustrating another method for operating a water electrolyzer.

[Fig. 8] Fig. 8 is a flowchart illustrating still another method for operating a water electrolyzer.

[Fig. 9] Fig. 9 includes graphs illustrating changes in voltage and current values with time which were measured during the operation of a water electrolysis cell prepared in Example 1.

[Fig. 10] Fig. 10 includes graphs illustrating changes in voltage and current values and temperature of a water electrolysis cell prepared in Example 2 with time which were measured during the operation of the water electrolysis cell.

Description of Embodiments

(Underlying Knowledge Forming Basis of the Present Disclosure)

PTL 1 discloses a structure in which the voltage applied to a water electrolyzer is interrupted at regular intervals. However, in the method for controlling a water electrolyzer which is described in PTL 1, the voltage application may be interrupted at unnecessary timings.

PTL 2 discloses a method of removing contaminants present inside a water electrolytic bath by passing a current between an anode and a cathode while a water electrolyzer is operated at low temperatures. However, the method for operating a water electrolyzer which is described in PTL 2 requires a considerably large amount of energy.

The inventors of the present invention conducted extensive studies, consequently found that the efficiency of hydrogen production can be maintained by controlling the operation of a water electrolyzer in an appropriate manner, and made the present disclosure.

(Summary of Aspects of the Present Disclosure)

A method for operating a water electrolyzer according to a first aspect of the present disclosure includes:

applying a voltage to a water electrolysis cell such that a current having a target current value flows through the water electrolysis cell; and
stopping the current that flows through the water electrolysis cell upon a voltage applied to the water electrolysis cell being increased to a predetermined threshold value or more when a water electrolysis reaction is performed.

According to the first aspect, a technique that limits a reduction in the efficiency of water electrolysis can be provided. Even when a water electrolyzer is operated continuously, the current that flows through a water electrolysis cell can be stopped at appropriate timings and an increase in the voltage applied to the water electrolysis cell can be limited. Consequently, the efficiency of hydrogen production is likely to be maintained at a high level.

According to a second aspect of the present disclosure, for example, in the method for operating a water electrolyzer according to the first aspect, while the current does not flow through the water electrolysis cell, a temperature of the water electrolysis cell may be reduced using a cooler that cools the water electrolysis cell. According to the second aspect, a technique that further limits a reduction in the efficiency of water electrolysis can be provided.

According to a third aspect of the present disclosure, for example, in the method for operating a water electrolyzer according to the second aspect, the temperature of the water electrolysis cell may be reduced by feeding an electrolyte solution to the water electrolysis cell, the electrolyte solution being cooled using the cooler. According to the third aspect, a technique that further limits a reduction in the efficiency of water electrolysis can be provided.

According to a fourth aspect of the present disclosure, for example, in the method for operating a water electrolyzer according to the third aspect, the cooler may include a heat exchanger disposed on a circulation circuit provided for circulating the electrolyte solution in the water electrolysis cell. Moreover, when the current does not flow through the water electrolysis cell, the electrolyte solution may be cooled using the cooler and circulated in the circulation circuit. According to the fourth aspect, the electrolyte solution can be cooled when a current does not flow through the water electrolysis cell.

According to a fifth aspect of the present disclosure, for example, in the method for operating a water electrolyzer according to any one of the first to fourth aspects, after the current that flows through the water electrolysis cell has been stopped, the current may be again passed through the water electrolysis cell. According to the fifth aspect, a water electrolysis reaction can be restarted in the water electrolysis cell after a reduction in the efficiency of water electrolysis has been addressed.

According to a sixth aspect of the present disclosure, for example, in the method for operating a water electrolyzer according to any one of the first to fifth aspects, the water electrolysis cell may be an anion exchange membrane-type water electrolysis cell.

According to a seventh aspect of the present disclosure, for example, in the method for operating a water electrolyzer according to any one of the first to sixth aspects, the water electrolysis cell may include an anode and a cathode, and at least one of the anode and the cathode may include at least one of Ni and Fe. According to the seventh aspect, an electrode catalyst that includes at least one of Ni and Fe limits the degradation of catalytic activity.

A method for operating a water electrolyzer according to an eighth aspect of the present disclosure may include, when a current is passed through a water electrolysis cell to perform a water electrolysis reaction, stopping the current that flows through a water electrolysis cell and reducing a temperature of the water electrolysis cell using a cooler that cools the water electrolysis cell.

According to the eighth aspect, a method for operating a water electrolyzer which limits a reduction in the efficiency of water electrolysis can be provided.

According to a ninth aspect of the present disclosure, for example, in the method for operating a water electrolyzer according to the eighth aspect, after the current that flows through the water electrolysis cell has been stopped, a current may be again passed through the water electrolysis cell. According to the ninth aspect, a water electrolysis reaction can be restarted in the water electrolysis cell after a reduction in the efficiency of water electrolysis has been addressed.

A water electrolyzer according to a tenth aspect of the present disclosure includes:

a water electrolysis cell;
a voltage applicator that applies a voltage to the water electrolysis cell;
a voltage sensor that detects the voltage applied to the water electrolysis cell; and
a controller that controls the voltage applied to the water electrolysis cell by the voltage applicator such that a current having a target current value flows through the water electrolysis cell, the controller causing the voltage applicator to stop the current that flows through the water electrolysis cell upon the voltage detected by the voltage sensor being increased to a predetermined threshold value or more when a water electrolysis reaction is performed in the water electrolysis cell.

According to the tenth aspect, a water electrolyzer that maintains a markedly high efficiency can be provided.

A water electrolyzer according to an eleventh aspect of the present disclosure includes:

a water electrolysis cell;
a cooler that cools the water electrolysis cell;
a voltage applicator that applies a voltage to the water electrolysis cell; and
a controller that causes the voltage applicator to stop a current that flows through the water electrolysis cell and causes the cooler to reduce a temperature of the water electrolysis cell when the voltage is applied to the water electrolysis cell by the voltage applicator and a water electrolysis reaction is performed in the water electrolysis cell.

According to the eleventh aspect, a water electrolyzer that limits a reduction in the efficiency of water electrolysis can be provided.

According to a twelfth aspect of the present disclosure, for example, the water electrolyzer according to the tenth aspect may further include a feeder that feeds an electrolyte solution to the water electrolysis cell. Moreover, the controller may cause the feeder to feed an electrolyte solution cooled with the cooler to the water electrolysis cell to reduce the temperature of the water electrolysis cell. According to the twelfth aspect, a water electrolyzer that maintains a further high efficiency can be provided.

According to a thirteenth aspect of the present disclosure, for example, the water electrolyzer according to the eleventh aspect may further include a circulation circuit for circulating the electrolyte solution in the water electrolysis cell. In addition, the cooler may include a heat exchanger disposed in the circulation circuit. The controller may cause the circulation circuit to circulate the electrolyte solution and may cause the cooler to cool the electrolyte solution when the current does not flow through the water electrolysis cell. According to the thirteenth aspect, the electrolyte solution can be cooled when a current does not flow through the water electrolysis cell.

Embodiments of the present disclosure are described with reference to the attached drawings below. Note that the present disclosure is not limited by the following embodiments.

[Water Electrolyzer]

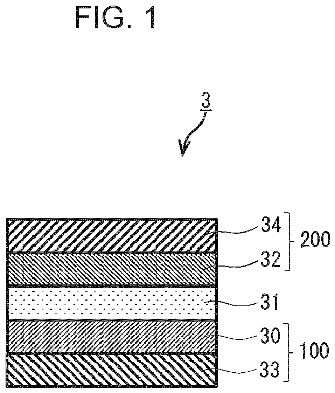

Fig. 1 is a cross-sectional view schematically illustrating an example of an anion exchange membrane-type water electrolysis cell. The water electrolysis cell 3 illustrated in Fig. 1 includes an electrolyte membrane 31, an anode 100, and a cathode 200. The electrolyte membrane 31 is interposed between the anode 100 and the cathode 200.

The anode 100 includes a catalyst layer 30 and an anode gas diffusion layer 33. The catalyst layer 30 is disposed on one of the principal surfaces of the electrolyte membrane 31. The anode gas diffusion layer 33 is disposed on the catalyst layer 30.

The cathode 200 includes a catalyst layer 32 and a cathode gas diffusion layer 34. The catalyst layer 32 is disposed on the other principal surface of the electrolyte membrane 31. The cathode gas diffusion layer 34 is disposed on the catalyst layer 32.

The catalyst layer 30 may be referred to as "anode catalyst layer". The catalyst layer 32 may be referred to as "cathode catalyst layer". The electrolyte membrane 31 is interposed between the anode catalyst layer 30 and the cathode catalyst layer 32. The anode gas diffusion layer 33 and the cathode gas diffusion layer 34 are arranged such that the above three elements are interposed therebetween.

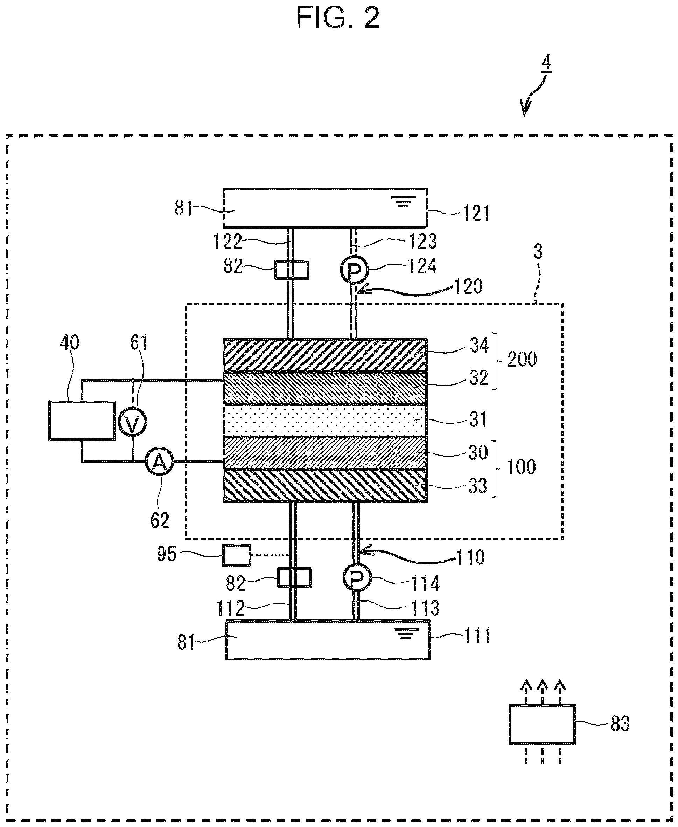

Fig. 2 is a cross-sectional view schematically illustrating an example of an anion exchange membrane-type water electrolyzer. The water electrolyzer 4 illustrated in Fig. 2 includes a water electrolysis cell 3, a voltage applicator 40, a voltage sensor 61, and a controller 83. Since the water electrolysis cell 3 illustrated in Fig. 2 is the same as the water electrolysis cell 3 illustrated in Fig. 1, the description thereof is omitted herein.

The voltage applicator 40 is connected to the anode 100 and the cathode 200 of the water electrolysis cell 3. The voltage applicator 40 is a device that applies a voltage to the water electrolysis cell 3. Specifically, the voltage applicator 40 is a device that applies a voltage between the anode 100 and the cathode 200. The voltage applicator 40 causes the potentials of the anode 100 and the cathode 200 to be relatively high and low, respectively. Specifically, the voltage applicator 40 applies a direct-current voltage between the anode 100 and the cathode 200.

The type of the voltage applicator 40 is not limited and may be any type of voltage applicator capable of applying a voltage between the anode 100 and the cathode 200.

The voltage applicator 40 may, but does not necessarily, include a power source. The voltage applicator 40 may, but does not necessarily, include a power converter. Note that the concept of the term "power converter" used herein includes a DC/DC converter and an AC/DC converter.

In a first specific example, a direct-current power source is used. The voltage applicator 40 is connected to the direct-current power source. The voltage applicator 40 includes a DC/DC converter. Examples of the direct-current power source include a battery, a solar cell, and a fuel cell.

In a second specific example, an alternating-current power source is used. The voltage applicator 40 is connected to the alternating-current power source. The voltage applicator 40 includes an AC/DC converter. Examples of the alternating-current power source include a commercial power source.

In a third specific example, the voltage applicator 40 is a wide-range power source. The voltage applicator 40 makes adjustments to the voltage applied between the anode 100 and the cathode 200 and the current that flows between the anode 100 and the cathode 200. Through the adjustments, the voltage applicator 40 adjusts the electric power fed to the water electrolyzer 4 to a predetermined value.

An electrolyte solution 81 including water is fed to the water electrolysis cell 3 from the outside. As a result of decomposition of water in the water electrolysis cell 3, hydrogen and oxygen are generated. The compositions of the electrolyte solution 81 fed to the anode 100 and the electrolyte solution 81 fed to the cathode 200 may be the same as or different from each other.

The water electrolyzer 4 includes a voltage sensor 61. The voltage sensor 61 detects the voltage applied to the water electrolysis cell 3. Specifically, the voltage sensor 61 is connected to the anode 100 and the cathode 200. The voltage sensor 61 detects the voltage applied between the anode 100 and the cathode 200.

The water electrolyzer 4 may include a current sensor 62. The current sensor 62 is interposed between the anode 100 and the voltage applicator 40. Alternatively, the current sensor 62 may be interposed between the cathode 200 and the voltage applicator 40. The current sensor 62 detects the current that flows between the anode 100 and the cathode 200.

The water electrolyzer 4 further includes a first circulation circuit 110, a pump 114, and a cooler 82. The first circulation circuit 110 is a circuit for circulating the electrolyte solution 81 in the water electrolysis cell 3. The first circulation circuit 110 includes a first container 111, a first feed channel 112, and a second feed channel 113. The pump 114 is disposed in the second feed channel 113. Alternatively, the pump 114 may be disposed in the first feed channel 112. The first and second feed channels 112 and 113 are pipes or the like.

The water electrolyzer 4 reduces the temperature of the water electrolysis cell with the cooler 82. Specifically, the water electrolyzer 4 reduces the temperature of the water electrolysis cell 3 by feeding the electrolyte solution 81 cooled with the cooler 82 to the water electrolysis cell 3. The cooler 82 is disposed in the first feed channel 112. The cooler 82 may alternatively be disposed in the second feed channel 113.

For example, the cooler 82 includes a heat exchanger. The heat exchanger is disposed in the first circulation circuit 110. The electrolyte solution 81 is cooled by heat exchange between a cooling medium and the electrolyte solution 81 in the cooler 82. After being cooled, the electrolyte solution 81 is circulated in the first circulation circuit 110 by the pump 114. This makes it possible to circulate the electrolyte solution 81 in the first circulation circuit 110 while the electrolyte solution 81 is cooled with the cooler 82 when a current does not flow through the water electrolysis cell 3. The cooling medium may be a liquid, such as water, or a gas, such as air. In the case where the cooling medium is a liquid, a heat exchanger such as a plate heat exchanger or a dual-pipe heat exchanger may be used as a cooler 82. In the cooler 82, a flow of the cooling medium is produced by a liquid-feed pump. In the case where the cooling medium is a gas, a heat exchanger such as a finned tube heat exchanger may be used as a cooler 82. In the cooler 82, a flow of the cooling medium is produced by a fan. Note that the structure of the cooler 82 is not limited. Another example of the cooler 82 is a chiller.

In the water electrolyzer 4, the cooler 82 cools the electrolyte solution during the water electrolysis operation and suspension of the operation.

The first container 111 accommodates the electrolyte solution 81. The first and second feed channels 112 and 113 connect the first container 111 and the water electrolysis cell 3 to each other. Specifically, the first and second feed channels 112 and 113 connect the first container 111 and the anode 100 to each other. The first circulation circuit 110 causes the electrolyte solution 81 to circulate between the first container 111 and the water electrolysis cell 3. Specifically, the first circulation circuit 110 causes the electrolyte solution to circulate between the first container 111 and the anode 100. The first container 111 is a tank or the like.

The water electrolyzer 4 includes a second circulation circuit 120, a pump 124, and a cooler 82. The second circulation circuit 120 includes a second container 121, a third feed channel 122, and a fourth feed channel 123. The pump 124 is disposed in the fourth feed channel 123. The pump 124 may be disposed in the third feed channel 122. The third and fourth feed channels 122 and 123 are pipes or the like. The pump 124 is an example of the feeder that feeds an electrolyte solution to the water electrolysis cell according to the present disclosure.

The cooler 82 is disposed in the third feed channel 122. The cooler 82 may alternatively be disposed in the fourth feed channel 123.

In the water electrolyzer 4, the second container 121 accommodates the electrolyte solution 81. The third and fourth feed channels 122 and 123 connect the second container 121 and the water electrolysis cell 3 to each other. Specifically, the third and fourth feed channels 122 and 123 connect the second container 121 and the cathode 200 to each other. The second circulation circuit 120 causes the electrolyte solution 81 to circulate between the second container 121 and the water electrolysis cell 3. Specifically, the second circulation circuit 120 causes the electrolyte solution 81 to circulate between the second container 121 and the cathode 200. The second container 121 is a tank or the like.

The water electrolyzer 4 illustrated in Fig. 2 includes a controller 83. The controller 83 typically includes a processing unit and a storage unit. The storage unit stores a program for executing a control. Specifically, the program includes a program for controlling the cooler 82 and a program for controlling the voltage applicator 40. The processing unit executes the program. Upon execution of the program, the cooler 82 and the voltage applicator 40 are controlled. The controller 83 is a microcomputer or the like.

The water electrolyzer 4 illustrated in Fig. 2 includes a temperature sensor 95. The temperature sensor 95 is used for performing a control with the controller 83. The temperature sensor 95 is a thermocouple or the like.

In the example illustrated in Fig. 2, the temperature sensor 95 is disposed in the first circulation circuit 110. Specifically, the temperature sensor 95 is disposed in a portion of the first circulation circuit 110 which is closer to the anode 100 than the cooler 82. Note that the position of the temperature sensor 95 is not limited to a specific position; the temperature sensor 95 may alternatively be disposed at a position at which it can directly measure the temperature of the electrolyte solution 81 accommodated by the first container 111.

The temperature sensor 95 may be disposed in the second circulation circuit 120. Specifically, the temperature sensor 95 may be disposed in a portion of the second circulation circuit 120 which is closer to the cathode 200 than the cooler 82. Note that the position of the temperature sensor 95 is not limited to a specific position; the temperature sensor 95 may alternatively be disposed at a position at which it can directly measure the temperature of the electrolyte solution 81 accommodated by the second container 121.

For example, the water electrolyzer 4 illustrated in Fig. 2 has a temperature adjustment function, which enables adjustment of the temperature of the electrolyte solution 81. The temperature adjustment function enables the operation to be performed under the temperature condition required by an anion exchange membrane-type water electrolyzer. The temperature adjustment function can be achieved using the temperature sensor 95. In a specific example, the controller 83 controls the amount of cooling performed with the cooler 82 such that the temperature of the electrolyte solution 81 detected by the temperature sensor 95 follows a target temperature. The amount of cooling can be controlled by adjusting the cooling capacity of the cooler 82 or the amount of operation of the pump 114 or 124. In the case where the temperature of the electrolyte solution 81 needs to be increased to a target temperature when, for example, the water electrolyzer 4 is started up, the amount of heating of the electrolyte solution 81 is controlled with a heater, which is not illustrated in the drawings. The temperature adjustment function can be achieved in the above-described manner. The heater is an electric heater or the like. The heater is disposed at the same position as the cooler 82.

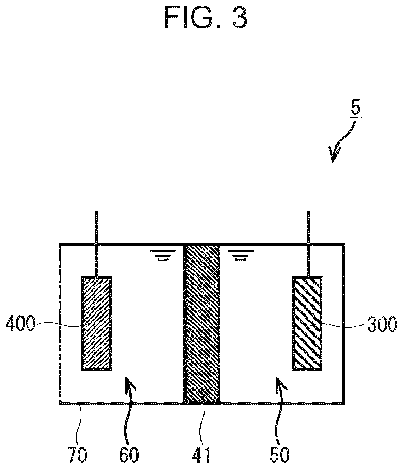

Fig. 3 is a cross-sectional view schematically illustrating an example of an alkali separation membrane-type water electrolysis cell. The water electrolysis cell 5 illustrated in Fig. 3 includes an anode 300 and a cathode 400. The water electrolysis cell 5 further includes an electrolytic bath 70, a first space 50, and a second space 60. The anode 300 is disposed in the first space 50. The cathode 400 is disposed in the second space 60. The water electrolysis cell 5 includes a separation membrane 41. The first space 50 and the second space 60 are separated from each other with the separation membrane 41. The separation membrane 41 is disposed inside the electrolytic bath 70.

The anode 300 and the cathode 400 each include a catalyst layer. The catalyst layer included in the anode 300 may be referred to as "anode catalyst layer". The catalyst layer included in the cathode 400 may be referred to as "cathode catalyst layer". The separation membrane 41 is interposed between the anode and cathode catalyst layers. The separation membrane 41 may be, but not limited to, an electrolyte membrane. The separation membrane 41 may be, but not necessarily, porous.

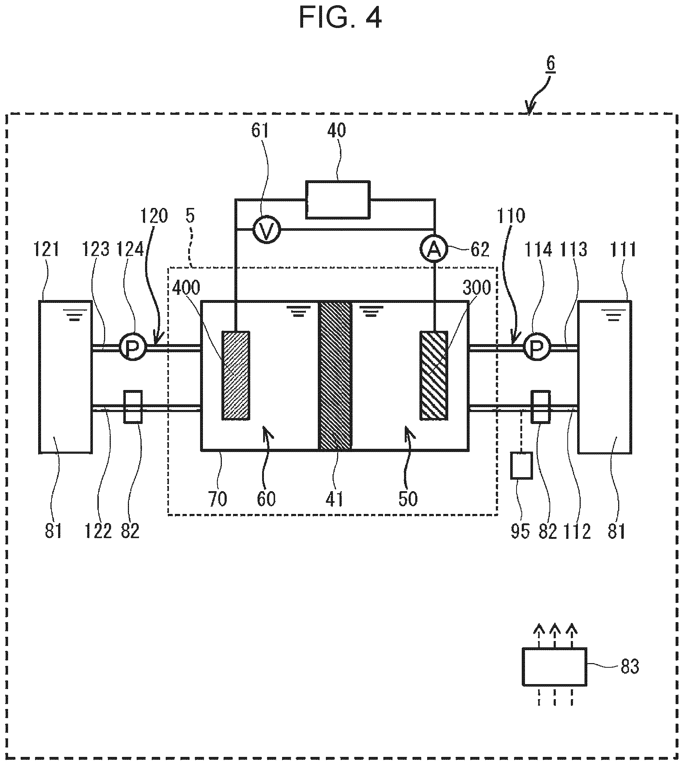

Fig. 4 is a cross-sectional view schematically illustrating an example of an alkali separation membrane-type water electrolyzer. The water electrolyzer 6 illustrated in Fig. 4 includes a water electrolysis cell 5 and a voltage applicator 40. The water electrolyzer 6 illustrated in Fig. 4 further includes a voltage sensor 61 and a current sensor 62. The voltage applicator 40 is connected to the anode 300 and the cathode 400 of the water electrolysis cell 5. The voltage sensor 61 is connected between the anode 300 and the cathode 400 of the water electrolysis cell 5. The current sensor 62 is connected to the anode 300 of the water electrolysis cell 5 and the voltage applicator 40. Alternatively, the current sensor 62 may be connected to the cathode 400 of the water electrolysis cell 5 and the voltage applicator 40. Since the water electrolysis cell 5 illustrated in Fig. 4 is the same as the element illustrated in Fig. 3, the description thereof is omitted herein.

The water electrolyzer 6 further includes a first circulation circuit 110 and a second circulation circuit 120. Since the first and second circulation circuits 110 and 120 illustrated in Fig. 4 are the same as those illustrated in Fig. 2, the description thereof is omitted herein.

In the water electrolyzer 6, the cooler 82 cools the electrolyte solution during the water electrolysis operation and suspension of the operation.

In the water electrolyzers 4 and 6, the second circulation circuit 120 may be absent while the first circulation circuit 110 is present. In such a case, the electrolyte solution 81 is fed to the cathode 200 or 400 as well as the anode 100 or 300 by the first circulation circuit 110. Note that the electrolyte solution is fed from the first circulation circuit 110 to the cathode 200 or 400 through the anode 100 or 300. A cooler 82 is disposed in the first circulation circuit 110.

The water electrolyzer 6 illustrated in Fig. 4 includes a controller 83. Since the controller 83 illustrated in Fig. 4 is the same as the element illustrated in Fig. 2, the description thereof is omitted herein.

The water electrolyzer 6 illustrated in Fig. 4 includes a temperature sensor 95. The temperature sensor 95 is used for performing a control with the controller 83. The temperature sensor 95 is a thermocouple or the like. Since the temperature sensor 95 illustrated in Fig. 4 is the same as the element illustrated in Fig. 2, the description thereof is omitted herein. The position at which the temperature sensor 95 is disposed is also the same as described above. Note that, in the example illustrated in Fig. 4, the temperature sensor 95 may alternatively be disposed at a position at which it can directly measure the temperature of the electrolyte solution 81 accommodated by the first space 50 and the second space 60.

The alkali separation membrane-type water electrolysis cell is not limited to the alkali separation membrane-type water electrolysis cells illustrated in Figs. 3 and 4. In an alkali separation membrane-type water electrolysis cell according to a modification example, as in the anion exchange membrane-type water electrolysis cell illustrated in Figs. 1 and 2, the anode includes a catalyst layer and an anode gas diffusion layer and the cathode includes a catalyst layer and a cathode gas diffusion layer. The features that can be applied to the cell or device illustrated in Figs. 1 to 4 can also be applied to the alkali separation membrane-type water electrolysis cell according to the modification example and a water electrolyzer that includes the cell unless a contradiction arises. Examples of the alkali separation membrane-type water electrolysis cell according to the modification example include an alkali separation membrane-type water electrolysis cell having a zero-gap structure.

[Electrode Catalyst Layer]

The electrode catalyst layer is described below. The anode catalyst layer 30 described above with reference to Figs. 1 and 2 may have the structure of the electrode catalyst layer described below. The cathode catalyst layer 32 described above with reference to Figs. 1 and 2 and the catalyst layers included in the anode 300 and the cathode 400 described above with reference to Figs. 3 and 4 may also have the structure of the electrode catalyst layer described below. The catalyst layers included in the anode and cathode of the alkali separation membrane-type water electrolysis cell according to the above modification example may also have the structure of the electrode catalyst layer described below.

In water electrolysis, a hydrogen gas and an oxygen gas are produced. The electrode catalyst layer includes a material reactive to a reaction in which these gases are produced. Examples of such a material include a layered double hydroxide (LDH), iridium oxide (IrOx), and platinum (Pt).

The LDH includes two or more transition metals. The transition metals include, for example, at least two selected from the group consisting of V, Cr, Mn, Fe, Co, Ni, Cu, W, and Ru.

The LDH has a composition represented by, for example, Formula (1) below.

$$[M1^{2+}{}_{1-x}M2^{3+}{}_{x}(OH)_2][yA^{n-}{\cdot}mH_2O] \quad \cdots \text{ Formula (1)}$$

In Formula (1), $M1^{2+}$ represents a divalent transition metal ion; $M2^{3+}$ represents a trivalent transition metal ion; $A^{n-}$ represents an interlayer anion; x represents a rational number that satisfies $0 < x < 1$; y represents a number that corresponds to the amount required for achieving charge balance; n represents an integer; and m represents a rational number.

The LDH may include Ni and Fe. In Formula (1), M1 may be Ni and M2 may be Fe. That is, the transition metal elements included in the LDH may be Ni and Fe. In such a case, the electrode catalyst may have a higher catalytic activity than, for example, an LDH including Co as M1.

At least one of the anode and cathode of the water electrolysis cell may include at least one of Ni and Fe. Specifically, at least one of the anode catalyst layer and cathode catalyst layer of the water electrolysis cell may include an LDH. In such a case, the LDH may include at least one of Ni and Fe. When at least one of the anode and cathode of the water electrolysis cell includes an LDH, the electrode catalyst may have a high catalytic activity.

The LDH may include a chelating agent. In such a case, the chelating agent may be coordinated to the transition metal ions included in the LDH. This enhances the dispersion stability of the LDH. Furthermore, since the LDH includes the chelating agent, LDH particles having a small size can be synthesized and, consequently, the surface area of the LDH particles can be increased. This enhances the catalytic activity. The average particle size of the LDH may be 100 nm or less and may be, for example 50 nm or less. The average particle size of the LDH is a value obtained by representing a grain size distribution obtained by small angle X-ray scattering (SAXS) in the form of a two-dimensional distribution diagram that represents the relationship between particle size and distribution and dividing the area of the two-dimensional distribution diagram by the total number of the particles. The term "distribution" used herein refers to a value proportional to the total volume of the particles having the particle size. The area of the two-dimensional distribution diagram is, for example, the product of the particle size and the number of particles that correspond to the particle size.

The chelating agent is not limited to a specific chelating agent. The chelating agent is, for example, an organic compound coordinated to a transition metal included in the LDH. The chelating agent may be at least one selected from a bidentate organic ligand and a tridentate organic ligand. Examples of the chelating agent include β-diketone, β-ketoester, and hydroxycarboxylic acid. Examples of the β-diketone include acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of the β-ketoester include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acid and the salts thereof include tartaric acid, citric acid, malic acid, gluconic acid, ferulic acid, lactic acid, glucuronic acid, and the salts thereof. The chelating agent may include at least one selected from the group consisting of acetylacetone and trisodium citrate. The chelating agent may be at least one selected from acetylacetone and trisodium citrate.

$A^{n-}$ represents an interlayer ion. $A^{n-}$ is an inorganic or organic ion. Examples of the inorganic ion include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO_4^-$, $CH_3(CH_2)_nCOO^-$, $CH_3(CH_2)_nPO_4^-$, and $CH_3(CH_2)_nNO_3^-$. $A^{n-}$ is an anion intercalated between metal hydroxide layers together with water molecules. The electric charge and ionic size of $A^{n-}$ are not limited to specific values. The types of $A^{n-}$ included in the LDH may be one or two or more.

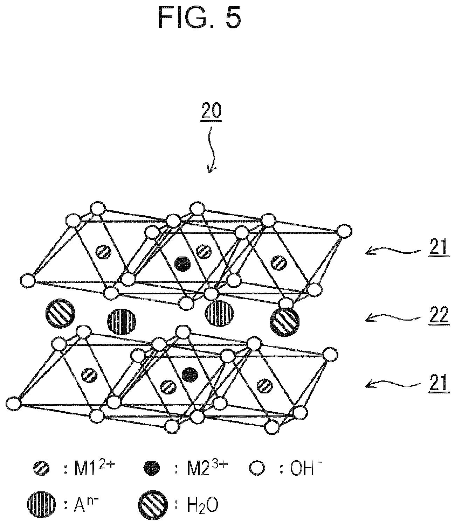

Fig. 5 is a diagram schematically illustrating an example of the crystal structure of an LDH. Specifically, Fig. 5 schematically illustrates an example of the crystal structure of the LDH represented by Formula (1). As illustrated in Fig. 5, an LDH 20 includes eight-face bodies each including $M1^{2+}$ or $M2^{3+}$ as a center and $OH^-$ ions attached to the vertices of the eight-face bodies. The metal hydroxide is represented by $[M1^{2+}{}_{1-x}M2^{3+}{}_{x}(OH)_2]^{x+}$. The metal hydroxide has a layered structure constituted by the hydroxide eight-face bodies joined with one another in a two-dimensional manner as a result of shearing their edges with one another. Anions and water molecules are intercalated between the metal hydroxide layers. The metal hydroxide layers serve as host layers 21. Anions and water molecules are intercalated therebetween as guest layers 22. That is, as a whole, the LDH 20 has a sheet-like structure constituted by the host layers 21 composed of metal hydroxide and the guest layers 22 composed of anions and water molecules which are alternately stacked on top of one another. The LDH 20 has a structure in which a part of the $M1^{2+}$ ions included in the metal hydroxide layers are replaced with M2$^{3+}$ ions. Therefore, commonly, the surfaces of particles of the LDH 20 are positively charged.

The electrode catalyst layer may further include a carrier. In such a case, since a carrier typically has electrical conductivity, the catalytic activity of the electrode catalyst can be readily maintained to be high. The carrier is not limited to a specific material. Examples of the carrier include a transition metal and a carbon material. Examples of the transition metal include V, Cr, Mn, Fe, Co, Ni, Cu, W, and Ru. Examples of the carbon material include acetylene black and Ketjenblack (KB).

The shape of the carrier is not limited to a specific shape. The shape of the carrier may be foam-like or particulate. The size of the carrier is not limited to a specific size.

The electrode catalyst layer may further include an organic high-molecular-weight compound. An organic high-molecular-weight compound is typically used to remove the catalyst. In such a case, the durability of the electrode catalyst layer can be readily maintained to be high. The organic high-molecular-weight compound is not limited to a specific material. Examples of the organic high-molecular-weight compound include a perfluoropolymer, a perfluorosulfonic acid polymer, and a high-molecular-weight compound the backbone of which includes a polystyrene skeleton. The shape, size, and degree of polymerization of the organic high-molecular-weight compound are not limited.

[Electrolyte Membrane]

The electrolyte membrane is described below. The electrolyte membrane 31 described with reference to Figs. 1 and 2 may have the structure of the electrolyte membrane described below. In the case where an alkali separation membrane-type water electrolysis cell includes an electrolyte membrane, the electrolyte membrane may have the structure of the electrolyte membrane described below.

The electrolyte membrane is not limited to a specific type. The electrolyte membrane may be porous and may have ionic conductivity. The electrolyte membrane may be an anion-exchange membrane. The electrolyte membrane has a structure that reduces the likelihood of an oxygen gas generated in the anode and a hydrogen gas generated in the cathode being mixed with each other. The above-described structure may limit an increase in the overvoltage of the water electrolysis cell. Note that the term "overvoltage" used herein refers to, in an electrochemical reaction, the difference between the theoretical potential (equilibrium electrode potential) of the reaction which is thermodynamically required and the electrode potential at which the actual reaction occurs. The electrolyte membrane may be porous and may have electron conductivity. The electrolyte membrane may have resistance.

[Diffusion Layer]

The diffusion layer is described below. The anode gas diffusion layer 33 and the cathode gas diffusion layer 34 described with reference to Figs. 1 and 2 may have the structure of the diffusion layer described below. In the case where an alkali separation membrane-type water electrolysis cell includes anode and cathode gas diffusion layers, the anode and cathode gas diffusion layers may have the structure of the diffusion layer described below.

The diffusion layer is not limited to a specific type. Examples of the diffusion layer include nickel, titanium, platinum, and carbon. The above-described structure may limit an increase in the overvoltage of the water electrolysis cell. Note that, in this context, the nickel, etc. may be a single element or a compound.

[Electrolyte Solution]

The electrolyte solution is described below. The water electrolyzer 4 described with reference to Fig. 2 and the water electrolyzer 6 described with reference to Fig. 4 may include the electrolyte solution described below. A water electrolyzer that includes the alkali separation membrane-type water electrolysis cell according to the modification example may also include the electrolyte solution described below.

In the case where the water electrolyzer is an anion exchange membrane-type water electrolyzer or an alkali separation membrane-type water electrolyzer, a neutral or alkaline aqueous solution may be used as an electrolyte solution. The alkaline aqueous solution is not limited to a specific type. Examples of the alkaline aqueous solution include an aqueous KOH solution, an aqueous NaOH solution, an aqueous $K_2CO_3$ solution, an aqueous $KHCO_3$ solution, an aqueous $Na_2CO_3$ solution, and an aqueous NaHCOs solution.

[Method for Operating Water Electrolyzer]

In a method for operating the water electrolyzer 4, a voltage is applied to the water electrolysis cell 3 in order to perform a water electrolysis reaction such that a current having a target current value flows through the water electrolysis cell 3. When the voltage applied to the water electrolysis cell 3 is increased to a predetermined threshold value or more, the current that flows through the water electrolysis cell 3 is stopped. Thus, even in the case where the water electrolyzer 4 is operated continuously, the current that flows through the water electrolysis cell can be stopped at appropriate timings and an increase in the voltage of the water electrolysis cell 3 can be limited consequently. This reduces a limitation of the efficiency of water electrolysis and may maintain the efficiency of hydrogen production at a high level.

In another method for operating the water electrolyzer 4, when a current is passed through the water electrolysis cell 3 to perform a water electrolysis reaction, the temperature of the water electrolysis cell 3 is reduced with a cooler 82 that cools the water electrolysis cell 3 in addition to stopping the current that flows through the water electrolysis cell 3. The above operating method also limits an increase in the voltage of the water electrolysis cell 3. This reduces a limitation of the efficiency of water electrolysis and may maintain the efficiency of hydrogen production at a high level.

The above description applies also to the water electrolysis cell 5 and the water electrolyzer 6 described above with reference to Figs. 3 and 4, respectively.

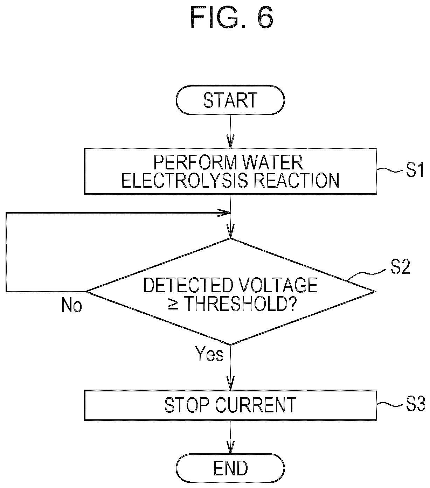

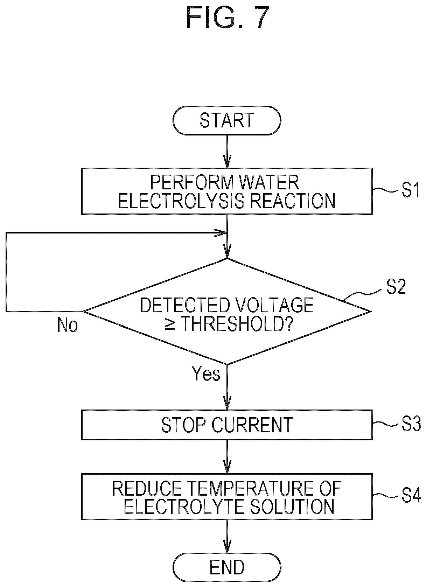

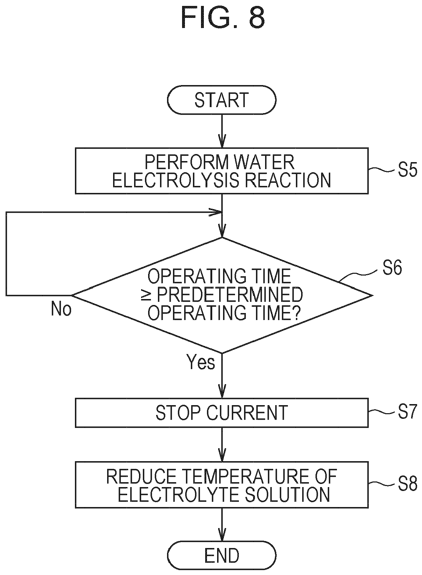

Fig. 6 is a flowchart illustrating the method for operating the water electrolyzer 4 illustrated in Fig. 2. The operating method according to this flowchart may apply also to the water electrolyzer 6 illustrated in Fig. 4. The steps of the control process according to this flowchart may be executed by the controller 83. The same applies also to the flowcharts of Figs. 7 and 8.

In Step S1, a water electrolysis reaction is performed using the water electrolyzer 4. Specifically, the water electrolysis reaction is performed by the voltage applicator 40 applying a voltage to the water electrolysis cell 3 such that a current having a target current value flows through the water electrolysis cell 3. The voltage applicator 40 is controlled such that a current having a target current value flows through the water electrolysis cell 3. The control of the voltage applicator 40 is a feedback control, such as a PID control, and may be a feedforward control. The target current value is a current value measured in the rated operation of the water electrolyzer 4. After the voltage application has been started, the current that flows through the water electrolysis cell 3 is gradually increased to reach the target current value.

In Step S2, whether the voltage applied to the water electrolysis cell 3 is equal to or more than a predetermined threshold value is determined. Specifically, in Step S2, whether the voltage detected by the voltage sensor 61 is equal to or more than a predetermined threshold value is determined. The threshold value is, for example, a voltage value equal to or more than a predetermined voltage value. The predetermined voltage value is set appropriately in accordance with various conditions, such as the types of the electrode materials and electrolyte solutions included in the anode 100 and the cathode 200 and the operating conditions. In another case, the predetermined voltage value may be set appropriately in accordance with the target current value.

When the voltage detected by the voltage sensor 61 is equal to or more than the predetermined threshold value, the current that flows through the water electrolysis cell 3 is reduced in Step S3. Specifically, in Step S3, the current that flows through the water electrolysis cell 3 is stopped. The current can be stopped by, for example, stopping the voltage applicator 40 applying a voltage to the water electrolysis cell 3; the method for stopping the current is not limited to this. Specifically, a voltage lower than the minimum voltage at which a water electrolysis reaction occurs in the water electrolysis cell 3 may be applied to the water electrolysis cell 3.

Fig. 7 is a flowchart illustrating another method for operating the water electrolyzer 4.

Steps S1 to S3 illustrated in Fig. 7 correspond to Steps S1 to S3 illustrated in Fig. 6, respectively.

The method for operating the water electrolyzer 4 includes Step S4. In Step S4, the temperature of the water electrolysis cell 3 is reduced with the cooler 82. Specifically, in Step S4, the temperature of the electrolyte solution 81 is reduced with the cooler 82. The temperature of the electrolyte solution 81 can be adjusted by, for example, cooling the electrolyte solution 81 fed to the water electrolysis cell 3 while controlling the cooler 82 such that the temperature of the electrolyte solution 81 reaches a target temperature. This reduces the temperature of the water electrolysis cell 3.

In the case where the water electrolyzer 4 includes the first circulation circuit 110 and/or the second circulation circuit 120, the electrolyte solution 81 can be cooled by the cooler 82 cooling the electrolyte solution 81 that circulates in the first circulation circuit 110 and/or the second circulation circuit 120. In Step S4, the water electrolysis operation is stopped. That is, the current that flows through the water electrolysis cell 3 is stopped. On the other hand, the electrolyte solution 81 is circulated in the first circulation circuit 110 and/or the second circulation circuit 120 by the pump 114 or 124. At this time, the electrolyte solution 81 is cooled with the cooler 82. This reduces the temperature of the electrolyte solution 81.

Both electrolyte solution 81 that is in contact with the anode 100 and electrolyte solution 81 that is in contact with the cathode 200 may be cooled. In another case, only the electrolyte solution 81 that is in contact with the anode 100 may be cooled.

After the current that flows through the water electrolysis cell 3 has been stopped, a current is again passed through the water electrolysis cell 3. For example, a current is again passed through the water electrolysis cell 3 after a lapse of predetermined period of time since the current that flows through the water electrolysis cell 3 was stopped. A current can be passed through the water electrolysis cell 3 by, for example, applying a voltage to the water electrolysis cell 3. Specifically, the controller 83 causes the voltage applicator 40 to start the voltage application. The voltage is applied to the water electrolysis cell 3. Specifically, the voltage is applied between the anode 100 and the cathode 200. Note that the above predetermined period of time is, in other words, a pause time during which the current that flows through the water electrolysis cell 3 is suspended. Thus, the controller 83 may automatically control the voltage applicator 40 such that a current is again passed through the water electrolysis cell 3 after a lapse of the predetermined period of time, even when a command to pass a current through the water electrolysis cell 3 is not given from the outside.

The period of time from when the current that flows through the water electrolysis cell 3 is stopped to when a current is again passed through the water electrolysis cell 3, that is, the predetermined period of time, is the time required for reducing the voltage applied to the water electrolysis cell 3 when a current having a predetermined current value (e.g., target current value) is to be passed through the water electrolysis cell 3 to a level lower than the voltage at which the current is stopped and is not limited to a specific period of time. In other words, the predetermined period of time is the time required for increasing the recovery voltage described below to more than 0 (recovery rate > 0%) and is not limited. The predetermined period of time may be, for example, 5 seconds or more, may be 15 seconds or more, may be 30 seconds or more, and may be 1 minute or more. The upper limit for the predetermined period of time is not limited and, for example, 10 minutes.

Fig. 8 is a flowchart illustrating still another method for operating the water electrolyzer 4.

In the other operating method, when a current is passed through the water electrolysis cell in order to perform a water electrolysis reaction, the temperature of the water electrolysis cell is reduced with a cooler that cools the water electrolysis cell in addition to stopping the current that flows through the water electrolysis cell. Specifically, the operating method is as described below.

In Step S5, a water electrolysis reaction is performed using the water electrolyzer 4. Steps S5, S7, and S8 correspond to Step S1 illustrated in Fig. 6, Step S3 illustrated in Fig. 6, and Step S4 illustrated in Fig. 7, respectively.

In Step S6, whether the period of time during which the water electrolyzer 4 is operated is equal to or more than a predetermined operating time is determined. The predetermined operating time may be a predetermined period of time. In Step S6, the timing of going to Step S7 may be determined using a timer. The period of time during which the water electrolyzer 4 is operated may be the period of time during which a current is passed through the water electrolysis cell 3.

When the period of time during which the water electrolyzer 4 is operated is equal to or more than the predetermined operating time, the current that flows through the water electrolysis cell 3 is stopped in Step S7.

In Step S8, the temperature of the water electrolysis cell 3 is reduced. Specifically, in Step S8, when a current does not flow through the water electrolysis cell 3, the temperature of the electrolyte solution 81 is reduced with the cooler 82.

According to the flowchart of Fig. 8, the temperature of the water electrolysis cell 3 can be reduced in addition to stopping the current that flows through the water electrolysis cell 3.

In the method for operating the water electrolyzer 4 illustrated in Fig. 8, a current may be again passed through the water electrolysis cell after a lapse of a predetermined period of time. Note that the above predetermined period of time is, in other words, a pause time during which the current that flows through the water electrolysis cell 3 is suspended. The predetermined period of time is the time required for reducing the voltage applied to the water electrolysis cell 3 when a current having a predetermined current value (e.g., target current value) is to be passed through the water electrolysis cell 3 to a level lower than the voltage at which the current is stopped and is not limited to a specific period of time.

The methods for operating the water electrolyzer 4 which are illustrated in Figs. 7 and 8 may further include the startup of the water electrolyzer 4. The startup of the water electrolyzer 4 includes, for example, first and second structures.

The first structure is a structure that, during the startup, the controller 83 causes a heater not illustrated in the drawings to perform heating to increase the temperature of the electrolyte solution 81.

The second structure is a structure that, during the startup, a current is passed through the water electrolysis cell 3. A current can be passed through the water electrolysis cell 3 by, for example, applying a voltage to the water electrolysis cell 3. Specifically, in the second structure, the controller 83 causes the voltage applicator 40 to start the voltage application. The voltage is applied to the water electrolysis cell 3. Specifically, the voltage is applied between the anode 100 and the cathode 200.

In the second structure according to the first example, the controller 83 causes the voltage applicator 40 to start the application of a voltage when the temperature of the electrolyte solution 81 detected by the temperature sensor 95 reaches a start temperature. The start temperature is a temperature less than the predetermined threshold value. The predetermined threshold value is lower than the target temperature to which the temperature of the electrolyte solution 81 is increased as a result of heating by the heater.

In the second structure according to the second example, the controller 83 causes the voltage applicator 40 to start the application of a voltage at a predetermined timing such that the voltage applicator 40 starts the application of a voltage when the temperature of the electrolyte solution 81 is less than a predetermined threshold value. The predetermined timing in the second example is set in consideration of the mode in which the temperature of the electrolyte solution 81 is increased according to the first structure. In a specific example of the second example, the controller 83 counts the amount of time from the start of the heating of the electrolyte solution 81 or the amount of time from the start of the heating performed by the heater with a timer and causes the voltage applicator 40 to start the application of a voltage when the amount of time counted reaches the predetermined amount of time. The timer may be either a software timer included in a microcomputer or a hardware timer.

According to the first example, the degree by which the temperature of the electrolyte solution 81 has been increased can be directly sensed using the temperature sensor 95 and, accordingly, the timing at which the application of a voltage by the voltage applicator 40 is to be started can be determined. According to the second example, the degree by which the temperature of the electrolyte solution 81 has been increased can be indirectly sensed and, accordingly, the timing at which the application of a voltage by the voltage applicator 40 is to be started can be determined. Note that, as can be understood from the first and second examples, it should be understood that the meaning of the term "threshold value" is not limited to a value at which a switchover of the control is made.

The second structure is further described below.

The voltage application may be started at any timing at which the temperature of the electrolyte solution 81 is less than the predetermined threshold value. For example, the above timing may be a timing before heating of the electrolyte solution 81 with the heater is started, may be a timing at which heating of the electrolyte solution 81 with the heater is started, and may be a timing after heating of the electrolyte solution 81 with the heater has been started. The second structure can be satisfied in any of the above cases.

Examples

The present disclosure is described in further details with reference to Examples below. Note that Examples below are merely examples of the present disclosure and the present disclosure is not limited by Examples below.

[Preparation of Water Electrolysis Cells]

In the evaluation of water electrolysis cells of Examples and Comparative Examples, the water electrolysis cells were prepared using electrolysis cell materials prepared as described below.

(Preparation of Ni-Fe LDH)

A Ni-Fe LDH was prepared in the following manner. First, a mixed solvent of water and ethanol was prepared. The volume ratio between water and ethanol was 2:3. The ethanol used was a guaranteed reagent produced by FUJIFILM Wako Pure Chemical Corporation. Nickel chloride hexahydrate and iron chloride hexahydrate were dissolved in the mixed solvent such that the total concentration of Ni and Fe ions was 1.0 mol/liter and the ratio of the amount of substance of the Fe ions to the total amount of substance of the Ni and Fe ions was 0.33. The nickel chloride hexahydrate and iron chloride hexahydrate used were products of FUJIFILM Wako Pure Chemical Corporation. To the resulting solution, acetylacetone (ACAC) was added as a chelating agent such that the amount of substance of the acetylacetone was 1/3 of the total amount of substance of the Ni and Fe ions. Subsequent to the addition of acetylacetone, the solution was stirred. Then, propylene oxide (POX) was added to the solution as a pH increaser in an amount that was double the amount of substance of the chloride ions included in the solution. The resulting mixture was stirred. Since the POX gradually captures the hydrogen ions included in the solution, the pH of the solution was gradually increased. After the reaction had been conducted for 24 hours, a Ni-Fe LDH was collected.

(Preparation of Anode)

The anode was prepared as follows. An ink including an anode catalyst, a binder, and a solvent was prepared. The anode catalyst used was a layered double hydroxide (LDH) including Ni and Fe, that is, a Ni-Fe LDH. The binder used was a Nafion Solution DE2020 produced by Aldrich Corporation. The solvent used was a mixed solvent of water and ethanol. The ink was applied to an anion exchange membrane by spray coating to form an anode catalyst layer on the anion exchange membrane. The anion exchange membrane used was QPAF-4 produced by Takahata Precision Japan Co., Ltd. Nickel was deposited on the anode catalyst layer to form an anode gas diffusion layer. The nickel material used was NPF17332-000 produced by Bekaert. Hereby, an anion exchange membrane on which an anode was disposed was prepared.

(Preparation of Cathode)

As a cathode gas diffusion layer, a carbon paper sheet TGP-H-120 produced by Toray Industries, Inc. was used. Platinum-supported carbon was applied to the carbon paper sheet by spray coating. Hereby, a cathode was prepared. The platinum-supported carbon material used was platinum-supported carbon TEC10E50E produced by Tanaka Kikinzoku Kogyo K.K. Hereby, a cathode including a cathode gas diffusion layer and a cathode catalyst layer disposed thereon was prepared.

(Preparation of Water Electrolysis Cell)

The anion exchange membrane on which the anode was disposed and the cathode were stacked on top of each other such that the cathode catalyst layer came into contact with the anion exchange membrane to form a membrane electrode assembly (MEA). A platinum-coated titanium separator was stacked on the anode gas diffusion layer. A carbon separator was stacked on the cathode gas diffusion layer. The membrane electrode assembly was sandwiched between the platinum-coated titanium separator and the carbon separator. Hereby, a water electrolysis cell was prepared.

(Example 1)

[Measurement of Cell Voltage]

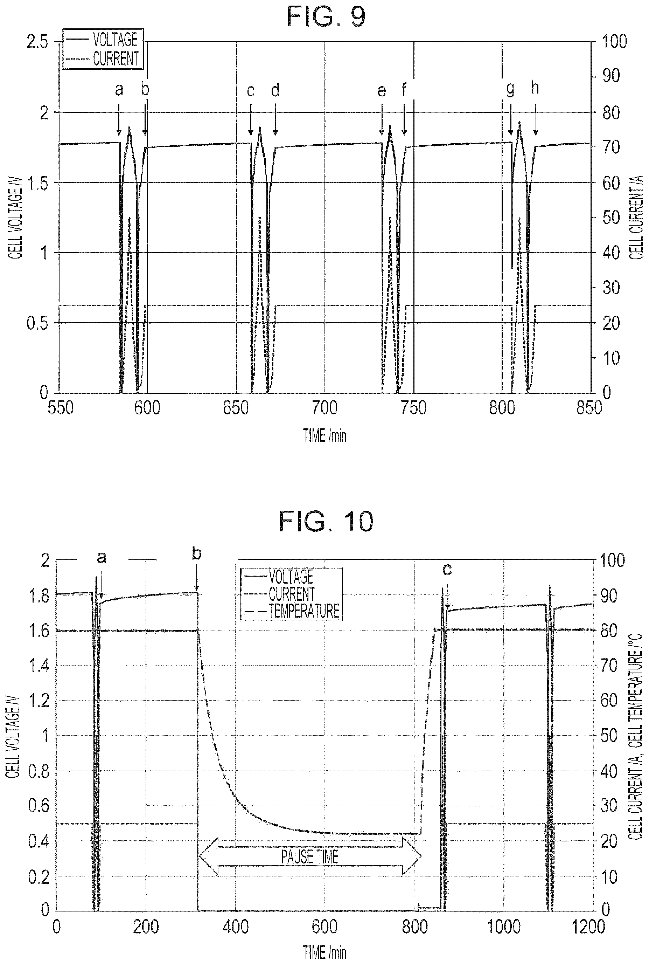

The cell voltage of the water electrolysis cell was measured using the water electrolysis cell prepared as described above. In the measurement, a change in the voltage of the water electrolysis cell with time, which resulted from gas generation, was measured using a water electrolysis cell evaluator produced by Netuden Kougyou Co., Ltd. under the following measurement conditions. Fig. 9 and Table 1 show the results. Note that "Temperature of water electrolysis cell" refers to the temperature detected by a thermocouple arranged to contact with the separator disposed in the water electrolysis cell.

(Measurement Conditions)

· Liquid fed: 1 mol/liter aqueous KOH solution
· Rate at which anode and cathode were fed with the liquid: 20 cc/min
· Temperature of water electrolysis cell: 80°C
· Pressure: normal pressure
· Rated current: 1 A/cm$^2$
· Effective surface area of electrodes: 25 cm$^2$

Fig. 9 includes graphs illustrating changes in voltage and current values with time which were measured during the operation of the water electrolysis cell prepared in Example 1. In Fig. 9, the horizontal axis shows the amount of time during which the water electrolyzer was operated. The left-hand side vertical axis shows the cell voltage, which is the voltage value applied to the water electrolysis cell, while the right-hand side vertical axis shows the cell current, which is the current value that flowed through the water electrolysis cell. In the graphs of Fig. 9, the solid line shows cell voltage, while the dotted line shows cell current. In Table 1, the term "stop time" refers to a period of time from when the current that flowed through the water electrolysis cell was stopped to when a current was again passed through the water electrolysis cell; the term "pre-recovery voltage" refers to the voltage value at which the current that flowed through the water electrolysis cell was stopped when a voltage was applied to the water electrolysis cell to perform a water electrolysis reaction; and the term "post-recovery voltage" refers to the voltage value at which the current that flowed through the water electrolysis cell reached the target current value after a current had been again passed through the water electrolysis cell after a lapse of the predetermined period of time, that is, the predetermined stop time, since the current that flowed through the water electrolysis cell was stopped. Note that, as illustrated in Fig. 9, in Example 1, when a current was again passed through the water electrolysis cell after the lapse of the predetermined stop time, the current value temporality increased to about 50 A and subsequently reduced to about 0 A. The current value was then increased such that a current having a target current value flowed through the water electrolysis cell, and a water electrolysis reaction was performed at the target current value. The term "post-recovery voltage" refers to the voltage value at which the target current value was achieved. The term "recovery voltage" refers to a difference between the pre-recovery voltage and the post-recovery voltage. A recovery rate was calculated by dividing the recovery voltage by the post-recovery voltage. In Example 1, the threshold value was set to 1.78 V.

[Table 1]

| Stop time | 1 min | 30 sec | 15 sec | 5 sec |
|---|---|---|---|---|
| Pre-recovery voltage (V) | 1.784 | 1.779 | 1.781 | 1.784 |
| Post-recovery voltage (V) | 1.710 | 1.713 | 1.718 | 1.776 |
| Recovery voltage (mV) | 74 | 66 | 63 | 8 |
| Recovery rate (%) | 4.3 | 3.9 | 3.7 | 0.5 |

(Comparative Example 1)

In Comparative Example 1, the current that flowed through the water electrolysis cell was not stopped when a voltage was applied to the water electrolysis cell to perform a water electrolysis reaction. In this case, the recovery rate was 0%.

In Fig. 9, the symbols "a" and "b" denote the positions at which the pre- and post-recovery voltages were read, respectively, when the stop time was 1 minute; the symbols "c" and "d" denote the positions at which the pre- and post-recovery voltages were read, respectively, when the stop time was 30 seconds; the symbols "e" and "f" denote the positions at which the pre- and post-recovery voltages were read, respectively, when the stop time was 15 seconds; and the symbols "g" and "h" denote the positions at which the pre- and post-recovery voltages were read, respectively, when the stop time was 5 seconds.

According to the results shown in Table 1, an increase in the voltage of the water electrolysis cell could be limited by again passing a current through the water electrolysis cell after the current that flowed through the water electrolysis cell had been stopped. In particular, an increase in the voltage of the water electrolysis cell could be limited by a further degree when the stop time was 15 seconds or more.

(Example 2)

[Measurement of Cell Voltage]

In Example 2, the effect of reducing the temperature of the electrolyte solution with a cooler when a current was not passed through the water electrolysis cell was determined. The cell voltage of the water electrolysis cell was measured using the water electrolysis cell prepared as described above. In the measurement, a change in the voltage of the water electrolysis cell with time, which resulted from gas generation, was measured using a water electrolysis cell evaluator produced by Netuden Kougyou Co., Ltd. under the same measurement conditions as in Example 1. Fig. 10 and Table 2 show the results.

Fig. 10 includes graphs illustrating changes in voltage and current values and the temperature of the water electrolysis cell prepared in Example 2 with time which were measured during the operation of the water electrolysis cell. In Fig. 10, the horizontal axis shows the amount of time during which the water electrolyzer was operated. The left-hand side vertical axis shows the cell voltage, which is the voltage value applied to the water electrolysis cell, while the right-hand side vertical axis shows the cell current, which is the current value that flowed through the water electrolysis cell, or the temperature of the water electrolysis cell. The temperature of the water electrolysis cell is the temperature of the electrolyte solution included in the water electrolysis cell. In this example, the term "pause time" refers to the period of time from when the current that flowed through the water electrolysis cell was stopped to when heating of the electrolyte solution was started. During the pause time, the temperature of the electrolyte solution was reduced with a cooler in addition to stopping the current that flowed through the water electrolysis cell. In Example 2, the pause time was set to 450 minutes.

Prior to the pause time, when the voltage applied to the water electrolysis cell was increased to the predetermined threshold value or more, the current that flowed through the water electrolysis cell was stopped. The predetermined threshold value was set to 1.81 V. After a lapse of 60 seconds since the current that flowed through the water electrolysis cell was stopped, a current was again passed through the water electrolysis cell. The voltage value at which the current that flowed through the water electrolysis cell reached the target current value was defined as "post-recovery voltage". Note that, as illustrated in Fig. 10, in Example 2, when a current was again passed through the water electrolysis cell after the lapse of 60 seconds since the current that flowed through the water electrolysis cell was stopped, the current value temporality increased to about 50 A and subsequently reduced to about 0 A. The current value was then increased such that a current having a target current value flowed through the water electrolysis cell, and a water electrolysis reaction was performed at the target current value. The term "post-recovery voltage" refers to the voltage value at which the target current value was achieved. In Fig. 10, the symbol "a" denotes the position at which the post-recovery voltage was read. The term "post-voltage rise voltage" refers to the voltage value at which reducing the temperature of the electrolyte solution was started in addition to stopping the current that flowed through the water electrolysis cell when the voltage applied to the water electrolysis cell was increased to the predetermined threshold value or more while a voltage was applied to the water electrolysis cell to perform a water electrolysis reaction. The predetermined threshold value was set to 1.81 V. Hereby, the pause time was started. In Fig. 10, the symbol "b" denotes the position at which the post-voltage rise voltage was read.

After a lapse of 450 minutes since the pause time was started, heating of the electrolyte solution was started. After a lapse of another 50 minutes, a current was again passed through the water electrolysis cell, and the voltage value at which a current having a target current value flowed through the water electrolysis cell was defined as "post-temperature drop voltage". Note that, as illustrated in Fig. 10, when a current was again passed through the water electrolysis cell, the current value temporality increased to about 50 A and subsequently reduced to about 0 A. The current value was then increased such that a current having a target current value flowed through the water electrolysis cell, and a water electrolysis reaction was performed at the target current value. The term "post-temperature drop voltage" refers to the voltage value at which the target current value was achieved. In Fig. 10, the symbol "c" denotes the position at which the post-temperature drop voltage was read. The term "recovery voltage A" refers to the difference between the post-recovery voltage and the post-temperature drop voltage. The recovery rate A was calculated by dividing the recovery voltage A by the post-temperature drop voltage. The term "recovery voltage B" refers to the difference between the post-voltage rise voltage and the post-temperature drop voltage. The recovery rate B was calculated by dividing the recovery voltage B by the post-temperature drop voltage.

[Table 2]

| Change in temperature of electrolyte solution during pause time (°C) | Pause time (min) | Post-recovery voltage (V) | Post-voltage rise voltage (V) | Post-temperature drop voltage (V) | Recovery voltage A (V) (recovery rate A (%)) | Recovery voltage B (V) (recovery rate B (%)) |
|---|---|---|---|---|---|---|
| 80 to 22 | 450 | 1.749 | 1.814 | 1.705 | 0.044 (2.6) | 0.109 (6.4) |

In Table 2, the recovery rate A was 2.6%. The recovery rate A indicates the effect of cooling the water electrolysis cell during the pause time to limit an increase in the voltage of the water electrolysis cell. On the other hand, the recovery rate B was 6.4%. The recovery rate B indicates the effect of stopping the current that flows through the water electrolysis cell and cooling the water electrolysis cell to limit an increase in the voltage of the water electrolysis cell. Note that the effect of stopping the current that flows through the water electrolysis cell without cooling the water electrolysis cell to limit an increase in the voltage of the water electrolysis cell is as described in Example 1. The above results confirm that the recovery rate B achieved in Example 2, where the water electrolysis cell was cooled while the current that flowed through the water electrolysis cell was stopped, was higher than the recovery rate achieved in Example 1, where the water electrolysis cell was not cooled. That is, cooling the water electrolysis cell limited an increase in the voltage of the water electrolysis cell. Moreover, stopping the current that flows through the water electrolysis cell in addition to cooling the water electrolysis cell further increased the effect to limit an increase in the voltage of the water electrolysis cell.

(Discussions)

The method for operating a water electrolyzer reduced the voltage value of the water electrolysis cell. Specifically, the method for operating a water electrolyzer enabled the function of a water electrolysis cell to be recovered. It is considered that the mechanisms by which the function was recovered include (1) the effect of removal of air bubbles generated on the electrodes during the water electrolysis reaction; and (2) the effect of the function of a catalyst being recovered as a result of the reduction of the anode catalyst.

It is considered that the mechanism (1) is as described below. During the water electrolysis reaction, oxygen is generated on the anode, while hydrogen is generated on the cathode. The gases may build up on the anode and the cathode. This reduces the area of portions of the anode and the cathode which contribute to the water electrolysis reaction. In this state, when the voltage applied to the water electrolysis cell is controlled such that a current having a target current value flows through the water electrolysis cell, the voltage increases. Reducing the current that flows through the water electrolysis cell reduces the amount of air bubbles generated on the electrodes. This increases the area of portions of the electrodes which contribute to the water electrolysis reaction and thereby recovers the function of the water electrolysis cell. As described above, the air bubbles generated on the anode and the cathode can be removed by reducing the current that flows through the water electrolysis cell. Alternatively, the air bubbles may be removed by reducing the temperature of the water electrolysis cell, that is, specifically, reducing the temperature of the electrolyte solution. Reducing the temperature of the water electrolysis cell reduces the volume of the gases generated on the anode and the cathode. It is considered that, for the above reasons, reducing the current that flowed through the water electrolysis cell and the temperature of the water electrolysis cell produced a further synergistic effect.

It is considered that the mechanism (2) is as described below. During a water electrolysis reaction, commonly, the anode catalyst is subjected to oxidation reduction. In this state, the anode catalyst is subjected to a highly oxidative state. As a result, in a water electrolysis reaction, an auto-oxidation reaction is superior to an oxygen-generating reaction on the anode. It is considered that, consequently, the applied voltage increases with the progress of the water electrolysis reaction. In the method for operating a water electrolyzer according to the present disclosure, the current that flows through the water electrolysis cell is reduced to reduce the anode voltage. It is considered that this causes the reduction of the anode catalyst, which is subjected to a highly oxidative state during a water electrolysis reaction, and the function of the catalyst can be recovered accordingly.

Industrial Applicability

According to an aspect of the present disclosure, it is possible to limit a reduction in the efficiency of water electrolysis in a water electrolysis reaction.

Reference Signs List

    3,5 water electrolysis cell
    4,6 water electrolyzer
    20 LDH
    21 host layer
    22 guest layer
    30,32 catalyst layer
    31 electrolyte membrane
    33,34 diffusion layer
    40 voltage applicator
    41 separation membrane
    50,60 space
    61 voltage sensor
    62 current sensor
    70 electrolytic bath
    81 electrolyte solution
    82 cooler
    83 controller
    95 temperature sensor
    100,300 anode
    112,113,122,123 feed channel
    111,121 container
    114,124 pump
    110,120 circulation circuit
    200,400 cathode

**Claims**

1.   A method for operating a water electrolyzer, the method comprising:

    applying a voltage to a water electrolysis cell such that a current having a target current value flows through the water electrolysis cell; and
    stopping the current that flows through the water electrolysis cell upon a voltage applied to the water electrolysis cell being increased to a predetermined threshold value or more when a water electrolysis reaction is performed.

**2.** The method for operating a water electrolyzer according to claim 1, wherein
while the current does not flow through the water electrolysis cell, a temperature of the water electrolysis cell is reduced using a cooler that cools the water electrolysis cell.

**3.** The method for operating a water electrolyzer according to claim 2, wherein:
the temperature of the water electrolysis cell is reduced by feeding an electrolyte solution to the water electrolysis cell, the electrolyte solution being cooled using the cooler.

**4.** The method for operating a water electrolyzer according to claim 3, wherein

the cooler includes a heat exchanger disposed on a circulation circuit provided for circulating the electrolyte solution in the water electrolysis cell, and
when the current does not flow through the water electrolysis cell, the electrolyte solution is cooled using the cooler and circulated in the circulation circuit.

**5.** The method for operating a water electrolyzer according to any one of claims 1 to 4, wherein
after the current that flows through the water electrolysis cell has been stopped, the current is again passed through the water electrolysis cell.

**6.** The method for operating a water electrolyzer according to any one of claims 1 to 5, wherein
the water electrolysis cell is an anion exchange membrane-type water electrolysis cell.

**7.** The method for operating a water electrolyzer according to any one of claims 1 to 6, wherein

the water electrolysis cell includes an anode and a cathode, and
at least one of the anode and the cathode includes at least one of Ni and Fe.

**8.** A method for operating a water electrolyzer, the method comprising:
when a current is passed through a water electrolysis cell to perform a water electrolysis reaction, stopping the current that flows through a water electrolysis cell and reducing a temperature of the water electrolysis cell using a cooler that cools the water electrolysis cell.

**9.** The method for operating a water electrolyzer according to claim 8, wherein
after the current that flows through the water electrolysis cell has been stopped, a current is again passed through the water electrolysis cell.

**10.** A water electrolyzer comprising:

a water electrolysis cell;
a voltage applicator that applies a voltage to the water electrolysis cell;
a voltage sensor that detects the voltage applied to the water electrolysis cell; and
a controller that controls the voltage applied to the water electrolysis cell by the voltage applicator such that a current having a target current value flows through the water electrolysis cell, the controller causing the voltage applicator to stop the current that flows through the water electrolysis cell upon the voltage detected by the voltage sensor being increased to a predetermined threshold value or more when a water electrolysis reaction is performed in the water electrolysis cell.

**11.** A water electrolyzer comprising:

a water electrolysis cell;
a cooler that cools the water electrolysis cell;
a voltage applicator that applies a voltage to the water electrolysis cell; and
a controller that causes the voltage applicator to stop a current that flows through the water electrolysis cell and causes the cooler to reduce a temperature of the water electrolysis cell when the voltage is applied to the water electrolysis cell by the voltage applicator and a water electrolysis reaction is performed in the water electrolysis cell.

**12.** The water electrolyzer according to claim 11, further comprising:

a feeder that feeds an electrolyte solution to the water electrolysis cell,
wherein the controller causes the feeder to feed an electrolyte solution cooled with the cooler to the water electrolysis cell to reduce the temperature of the water electrolysis cell.

**13.** The water electrolyzer according to claim 12, further comprising:

a circulation circuit for circulating the electrolyte solution in the water electrolysis cell,
wherein the cooler includes a heat exchanger disposed in the circulation circuit, and

the controller causes the circulation circuit to circulate the electrolyte solution あ and causes the cooler to cool the electrolyte solution when the current does not flow through the water electrolysis cell.

FIG. 1

# FIG. 2

# FIG. 3

# FIG. 4

# FIG. 5

⊘ : M1²⁺     ● : M2³⁺     ○ : OH⁻

▥ : Aⁿ⁻     ▨ : H₂O

# FIG. 6

START

PERFORM WATER
ELECTROLYSIS REACTION — S1

DETECTED VOLTAGE
≥ THRESHOLD? — S2

No

Yes

STOP CURRENT — S3

END

# FIG. 7

START

PERFORM WATER
ELECTROLYSIS REACTION — S1

DETECTED VOLTAGE
≥ THRESHOLD? — S2

No

Yes

STOP CURRENT — S3

REDUCE TEMPERATURE OF
ELECTROLYTE SOLUTION — S4

END

# FIG. 8

START

PERFORM WATER
ELECTROLYSIS REACTION — S5

OPERATING TIME
≥ PREDETERMINED
OPERATING TIME? — S6

No

Yes

STOP CURRENT — S7

REDUCE TEMPERATURE OF
ELECTROLYTE SOLUTION — S8

END

# FIG. 9

# FIG. 10

## INTERNATIONAL SEARCH REPORT

| International application No. |
| --- |
| **PCT/JP2022/042984** |

**A.   CLASSIFICATION OF SUBJECT MATTER**

*C25B 15/00*(2006.01)i; *C01B 3/02*(2006.01)i; *C25B 1/04*(2021.01)i; *C25B 9/00*(2021.01)i; *C25B 9/67*(2021.01)i; *C25B 11/052*(2021.01)i; *C25B 11/075*(2021.01)i; *C25B 15/023*(2021.01)i

FI:   C25B15/00 303; C01B3/02 H; C25B1/04; C25B9/00 A; C25B9/67; C25B11/052; C25B11/075; C25B15/023

According to International Patent Classification (IPC) or to both national classification and IPC

**B.   FIELDS SEARCHED**

Minimum documentation searched (classification system followed by classification symbols)

C25B1/04-1/044; C25B9/00-9/77; C25B15/00-15/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X | JP 2010-121146 A (HITACHI SHIPBUILDING ENG CO) 03 June 2010 (2010-06-03) claims 1, 3, paragraphs [0005], [0034] | 1, 5, 10 |
| Y | | 6-7 |
| A | | 2-4 |
| X | WO 2016/147434 A1 (KABUSHIKI KAISHA TOSHIBA) 22 September 2016 (2016-09-22) claims 1, 7, paragraph [0016] | 1, 5, 10 |
| A | | 2-4, 6-9, 11-13 |
| X | JP 3100571 U (UNION CORP) 20 May 2004 (2004-05-20) claims, paragraphs [0008], [0027]-[0028] | 8-9, 11-13 |
| A | | 1-7, 10 |
| Y | WO 2017/069083 A1 (MITSUBISHI HEAVY IND ENVIRONMENTAL & CHEMICAL ENG CO LTD) 27 April 2017 (2017-04-27) claims, paragraphs [0002], [0023]-[0024] | 6-7 |
| A | | 1-5, 8-13 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 January 2023** | **07 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/042984**

**C.     DOCUMENTS CONSIDERED TO BE RELEVANT**

| Category* | Citation of document, with indication, where appropriate, of the relevant passages | Relevant to claim No. |
|---|---|---|
| Y | JP 2020-84259 A (TOYOTA CENTRAL RES & DEV) 04 June 2020 (2020-06-04)<br>     claims, paragraphs [0060]-[0065], fig. 9 | 8-9 |
| A | | 1-7, 10-13 |
| Y | WO 2020/208991 A1 (HITACHI SHIPBUILDING ENG CO) 15 October 2020 (2020-10-15)<br>     claims, paragraphs [0029], [0038] | 8-9 |
| A | | 1-7, 10-13 |
| A | JP 2017-206731 A (ASAHI KASEI CORP) 24 November 2017 (2017-11-24)<br>     claims, paragraph [0080] | 1-13 |
| A | JP 2019-99840 A (HOSHIZAKI CORP) 24 June 2019 (2019-06-24)<br>     claims, paragraph [0021] | 1-13 |

Form PCT/ISA/210 (second sheet) (January 2015)

**INTERNATIONAL SEARCH REPORT**

**Information on patent family members**

International application No.

**PCT/JP2022/042984**

| Patent document cited in search report | | | Publication date (day/month/year) | Patent family member(s) | | | Publication date (day/month/year) |
|---|---|---|---|---|---|---|---|
| JP | 2010-121146 | A | 03 June 2010 | (Family: none) | | | |
| WO | 2016/147434 | A1 | 22 September 2016 | (Family: none) | | | |
| JP | 3100571 | U | 20 May 2004 | (Family: none) | | | |
| WO | 2017/069083 | A1 | 27 April 2017 | US<br>claims, paragraphs [0003], [0036]-[0038]<br>EP<br>CN | 2018/0305828<br><br><br>3348672<br>108138341 | A1<br><br><br>A1<br>A | |
| JP | 2020-84259 | A | 04 June 2020 | (Family: none) | | | |
| WO | 2020/208991 | A1 | 15 October 2020 | US<br>claims, paragraphs [0033], [0043]<br>EP<br>CN<br>TW | 2022/0145476<br><br><br>3954809<br>113677830<br>202104671 | A1<br><br><br>A1<br>A<br>A | |
| JP | 2017-206731 | A | 24 November 2017 | (Family: none) | | | |
| JP | 2019-99840 | A | 24 June 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021070849 A

- JP 2020208991 A